(19) Europäisches Patentamt
European Patent Office
Office européen des brevets

(11) EP 3 633 510 A1

(12) EUROPEAN PATENT APPLICATION

(43) Date of publication:
08.04.2020 Bulletin 2020/15

(51) Int Cl.:
G06F 11/00 (2006.01)     G01N 35/00 (2006.01)

(21) Application number: 18197970.9

(22) Date of filing: 01.10.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Siemens Aktiengesellschaft
80333 München (DE)

(72) Inventor: NAIR, Sudev
560078 Bangalore (IN)

(74) Representative: Isarpatent
Patent- und Rechtsanwälte Behnisch Barth
Charles
Hassa Peckmann & Partner mbB
Friedrichstrasse 31
80801 München (DE)

(54) **SYSTEM, APPARATUS AND METHOD OF OPERATING A LABORATORY AUTOMATION ENVIRONMENT**

(57) The present invention provides a system, apparatus and method of operating a laboratory automation environment (280). The laboratory automation environment (280) comprises a plurality of devices (202-212). The method comprising generating a sample model associated with a sample process-able in the laboratory automation environment (280). The sample model comprises parameters associated with quality and functionality of the sample. The method further comprises predicting reliability of the laboratory automation environment (280) based on a laboratory replica of the laboratory automation environment (280). Furthermore, the method comprises generating a control signal to control the laboratory automation environment (280) based on the predicted reliability and the sample model.

FIG 2

EP 3 633 510 A1

## Description

The present invention relates to operating a Laboratory Automation Environment.

Laboratory Automation Environments (LAEs) may include multiple devices that may perform multiple processes in relation to one or more samples. Generally, accuracy of the processes may depend on integrity of the one or more samples. In addition, the accuracy of the processes may not be met due to unavailability of the devices in the LAEs. For example, in a LAE for medical diagnostics, integrity of a blood sample and the availability of the devices processing the blood sample may play a significant role is diagnosis of a patient.

One of the known techniques is to simulate operation of a laboratory testing system prior to installation at a customer site. The technique also estimates performance of laboratory testing system. However, simulation of the laboratory testing system may not consider the integrity of the samples and therefore may not be able to operate the laboratory testing system effectively.

In light of the above, there exists a need to effectively operate a Laboratory Automation Environment (LAE).

Therefore, it is an object of the present invention to provide a system, apparatus and method for operating a LAE such that accuracy of the processes performed in LAE is monitored and controlled.

The object of the present invention is achieved by a method of operating a Laboratory Automation Environment (LAE). The LAE comprises multiple devices capable of performing one or more processes on one or more samples. As used herein "sample" refers to a specimen of biological, organic, in-organic or synthetic origin. The sample is taken by sampling a biological specimen, a naturally occurring specimen or a synthesized specimen. Multiple samples refer to different samplings taken from one or more types of specimen. Example samples include sampling of blood, urine, plasma, serum, pharmaceutical composition, mountain salts, topical drug, cosmetic composition, etc.

As used herein, "LAE" is a laboratory set-up that is used to analyse, test, and validate one or more samples. Example LAE include medical diagnostic systems, clinical chemistry systems, drug testing systems, molecular diagnostic systems, etc. As used herein, "process" refers to the analysis, testing and validation that are performed in the LAE. For example, the process includes analysis such as haematology analysis, urine analysis, plasma analysis, drug testing, cosmetic testing, etc.

Sensor data associated with the LAE is received from different sources (e.g., sensors, user devices, etc.). The sensors measure parameters associated with operation state of the devices. For example, the sensors may include thermal imaging devices, pressure sensors, air quality sensors, vibration sensors, etc. The term "operation state" refers to one or more characteristics of the LAE and/or the devices in the LAE at a given time. The sensor data may be modelled to define the operation state of the LAE.

The method includes generating a sample model associated with the sample process-able in the LAE. Further, the method includes predicting reliability of the LAE based on a laboratory replica of the LAE. Furthermore, the method includes operating the LAE based on the predicted reliability and the sample model.

The method may include generating a control signal to control the LAE based on the predicted reliability and the sample model. The method advantageously controls the LAE to ensure that quality and functionality of the sample in the LAE is maintained throughout the process.

As used herein, the sample model represents the sample throughout the process performed in the LAE. The sample model includes parameters associated with quality and functionality of the sample. The parameters include physical, chemical, biological, and/or microbiological parameters. The parameters associated with the quality and functionality of the sample refers to critical variables of the physical, chemical, biological, and/or microbiological parameters within a distribution spectrum. The critical variables within the distribution spectrum ensure that the functionality of the sample is achieved. The parameters are also representative of the operation state of the LAE, such as ambient temperature.

The sample model also includes predicted parameters associated with the sample with respect to time and/or changes in the LAE. Further, the sample model includes prediction models to predict interaction between the parameters of the sample and predict impact of variation in the parameters on the quality and functionality of the sample. The sample model is advantageously capable of representing the quality and the functionality of the sample.

As used herein, the laboratory replica represents the operation state of the LAE in real-time. The laboratory replica includes multiple models of sensor data to represent the operation state. The laboratory replica may include one-dimension model or three-dimension model of the LAE and each of the devices. The one-dimension model or three-dimension model may be generated in real time on the premises of the LAE. The one-dimension model and three-dimension models are dynamic models that are computed based on laws of physics. The dynamic models refer to multi body dynamic simulations performed on the devices of the LAE. The dynamic simulations are performed to determine stresses imparted in the structure during operation.

The laboratory replica may also include simulation of the devices in the LAE, an availability model and fault model of the devices. The laboratory replica is used to predict reliability of the LAE. Therefore, the method advantageously considers the availability of the devices and faults in the LAE while predicting the reliability of LAE.

As used herein, the availability model refers to a prediction model of availability of the devices and the LAE. The availability of the devices and LAE is a function of service parameters and demand associated with the devices. In an embodiment, the availability model may be generated from historical data associated with performance of the devices. The availability model may be used to predict reliability of the LAE. In another embodiment, the availability model may be generated based on demand on the LAE. For example, devices in a LAE associated with a hospital may be on peak demand between 9 am to 2 pm with a reduction in the demand after 2pm. The availability model advantageously models the demand in real-time to estimate remaining life of the devices.

As used herein, the fault model refers to a model of performance of the devices. The performance is modelled with respect to fault signatures of one or more fault indications based on the sensor data from the sensing unit. The fault indications refer to anomalies detected in the sensor data. The fault indications may be due to fatigue caused by operation of the devices in the LAE. The fault signature refers to an electronic footprint of the fault indications in the devices. The fault signatures contain information regarding various health status conditions of the devices. The reliability of the LAE is dependent on the performance of the devices and therefore, the fault model may be used to predict reliability of the LAE.

The method may include determining a set of optimal parameters of the sample based on the functionality of the sample and/or process performed in the laboratory automation environment. As used herein, the set of optimal parameters define a set of optimal measures of the critical variables associated with the process. Accuracy of the process is predicted for each set of optimal parameters by simulating each of the set of optimal parameters on the laboratory replica and the sample model. The predicted accuracy is used to determine an optimal accuracy required for the process. Based on the optimal accuracy optimal sample parameters are predicted. As used herein, the optimal sample parameters refer to an optimum measure of critical variables associated with the process.

The method may further include determining real-time parameters of the sample based on the sensor data. The real-time parameters and the set of optimal parameters are compared to determine a deviation in the real-time parameters. When the deviation is within a predetermined threshold, the sample is determined as usable for the process in the LAE. When the sample is determined as usable, the method advantageously predicts sample degradation. The prediction of the sample degradation informs a user of the LAE when the sample will not be usable.

The method may further include generating a sensitivity model with relationship between the laboratory replica and the sample model. The sensitivity model is a simulation of responses from the sample model if there are changes in the LAE. For example, the sensitivity model may be a qualitative prior model, which is a network of known interactions between the parameters of the sample and the LAE. The sample degradation is predicted based on the sensitivity model. The method advantageously models sample degradation as a function of the sample model and the reliability of the LAE.

The method further includes operating the LAE with the control signal by changing the operation state of the LAE to ensure optimal accuracy, minimal sample degradation. The control signal in operation may effect implementation of the optimal sample parameters.

The method may further include rendering the predicted reliability, the availability model, the fault model, the laboratory replica and/or the sample model on a display unit. For example, representative views of the devices and/or a portion of the LAE is rendered on a display device (such as desktop monitor, mobile screen, etc.).

The object of the present invention is also achieved by an apparatus to control a LAE. The LAE includes multiple devices to perform one or more processes on one or more samples. The apparatus includes one or more processing units and a memory unit communicative coupled to the one or more processing units. The memory unit comprises a control module stored in the form of machine-readable instructions executable by the one or more processing units. The control module is configured to perform method steps described above. The execution of the control module can also be performed using co-processing units such as Graphical Processing Unit (GPU), Field Programmable Gate Array (FPGA) or Neural Processing/Compute Engines.

According to an embodiment of the present invention, the apparatus may be an IoT device. As used herein, "IoT device" refers to device connected to the sensors unit in the LAE on one end and to a remote server(s) such as for computing server(s) or cloud computing server(s) on the other end). A network of the IoT devices can also be used to implement the apparatus. The apparatus is advantageous as the control of the LAE is performed on premises without the need of uploading the operation state of the LAE and the parameters of the sample onto a cloud computing server. Therefore, the apparatus maintains privacy, security and conserves bandwidth.

The object of the present invention is achieved by a computer-program product having machine-readable instructions stored therein, which when executed by a processing unit, cause the processing unit to perform a method as describe above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:

FIG 1　illustrates a block diagram of an apparatus to control a Laboratory Automation Environment (LAE), according to an embodiment of the present invention;

FIG 2　illustrates a block diagram of a system to control a Lab Diagnostic System, according to an embodiment of the present invention;

FIG 3　is a schematic representation illustrating operation of the system in FIG 2, according to an embodiment of the present invention;

FIG 4　illustrates a block diagram of a system to control multiple LAEs, according to an embodiment of the present invention; and

FIG 5　is a flowchart of a method of operating a LAE, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

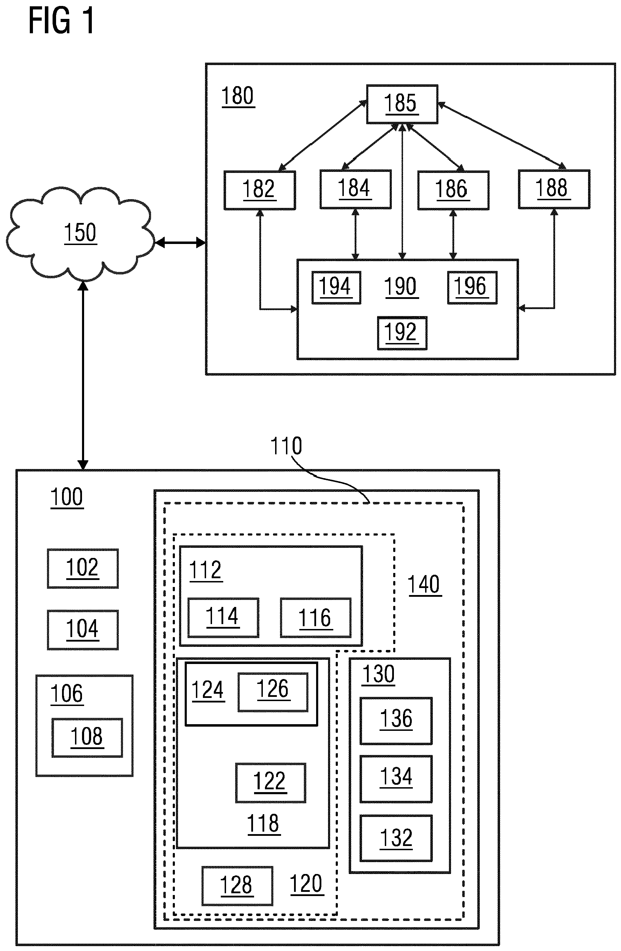

FIG 1 illustrates a block diagram of an apparatus 100 to control a Laboratory Automation Environment (LAE) 180. The LAE 180 includes a plurality of devices 182-188 to execute one or more processes. The operation of the LAE 180 is captured by means of a sensing unit 185. The sensing unit 185 includes multiple sensors and testing devices. The LAE 180 also includes a controller 190 communicatively coupled to the plurality of devices 182-188 and the sensing unit 185. The controller 190 includes a transceiver 192, a processing unit 194 and a memory 196. In an embodiment, functionality of the apparatus 100 is performed by the controller 190. According to the embodiment, the memory 196 includes modules 120 and 130 provided in memory 110 of the apparatus 100. The controller 190 receives sensor data from the sensing unit 185 and transmits the sensor data to the apparatus 100 via the network interface 150.

The apparatus 100 includes a communication unit 102, at least one processing unit 104, a display 106, a Graphical User Interface (GUI) 108 and a memory 110. The communication unit 102 includes a transmitter, a receiver and Gigabit Ethernet port. The memory 110 may include 2 Giga byte Random Access Memory (RAM) Package on Package (PoP) stacked and Flash Storage. The memory 110 is provided with modules stored in the form of computer readable instructions, for example, 120 and 130. The modules 120, 130 are part of a control module 140.

The processing unit 104 is configured to execute the defined computer program instructions in the control module 140. Further, the processing unit 104 is configured to execute the instructions in the memory 110 simultaneously. The display 106 includes a High-Definition Multimedia Interface (HDMI) display 106 and a cooling fan (not shown in the figure). The processing unit 104 is configured to execute the defined computer program instructions in the module 140. Further, the processing unit 104 is configured to execute the instructions in the memory 110 simultaneously. The display 106 includes a High-Definition Multimedia Interface (HDMI) display 106 and a cooling fan (not shown in the figure).

The memory 110 includes a simulation module 120 and an accuracy module 130. The simulation module 120 includes a sample module 112 and a laboratory module 118. The sample module 112 further includes a sample training module 114 and a sample simulation module 116. The laboratory module 118 includes a laboratory simulation module 122 and a reliability module 124. The accuracy module 130 includes an optimization module 132, a sensitivity module 134 and a sample degradation module 136.

The sample module 112 is configured to generate a sample model associated with a sample processable in the laboratory automation environment. As used herein, the sample model comprises parameters associated with quality and functionality of the sample. The parameters are generated by the sample training module 114. For example, the parameters include physical, chemical, biological, and/or microbiological parameters within a distribution spectrum to ensure that the functionality of the sample is achieved. The functionality of the sample is a metric that indicates composition, end use of the sample and/or process that is performed on the sample. For example, the process refers to the type of analysis such as haematology analysis, urine analysis, plasma analysis, drug testing, cosmetic testing, etc. Considering an example of a topical application drug as the sample, the composition of the drug and its end use (as an anti-infectant or antiinflammatory) defines its functionality.

The sample training module 114 comprises of supervised learning and/ unsupervised learning algorithms that are configured to determine the parameters associated with quality and functionality of the sample. In an embodiment, the sample training module 114 comprises a neural network with nodes that define a set of relationships between the parameters, the end use, the composition and the process associated with the sample. For example, the neural network is a Generative adversarial network. In another embodiment, the sample training module 114 includes a pattern recognition algorithm configured to define a set of relationships between the parameters, the end use, the composition and the process associated with the sample. For example, the pattern recognition algorithm includes K-means clustering.

The parameters determined by the sample training module 114 are modelled by the sample simulation module 116 to generate the sample model. The sample model includes prediction models to predict interaction between the parameters of the sample and predict impact of variation in the parameters on the quality and functionality of the sample. The sample model is advantageously capable of representing the quality and the functionality of the sample. Accordingly, on execution of the sample module 112, a user of the LAE 180 is aware of the quality of the sample. Further, the user is also aware whether the sample is capable of achieving the functionality.

The laboratory module 118 on execution is configured to predict reliability of the laboratory automation environment based on a laboratory replica of the LAE 180. The laboratory replica represents an operation state of the LAE 180 in real-time. As used herein, the laboratory replica comprises an availability model of the LAE 180, simulation of each of the plurality of devices 182-188 and a fault model of the LAE 180. The laboratory replica is generated by the laboratory simulation module 122. Accordingly, the laboratory simulation module 122 is configured to generate the availability model, the fault model and the simulations of each of the plurality of devices 182-188. In addition, the laboratory simulation module 122 updates the laboratory replica of the laboratory automation environment with updation in the operation state of the LAE 180. The operation state is represented in the sensor data and therefore, the laboratory replica is updated with the sensor data.

As used herein, the availability model refers to a prediction model that predicts whether the LAE 180 will be available. The availability model also includes device availability model. The device availability model includes device service and performance parameters from historical data of the devices 182-188. Further, the fault model refers to a model of the performance parameters of the devices 182-188. The performance parameters are modelled with respect to fault signatures of one or more fault indications based on the sensor data from the sensing unit 185. The fault indications refer to anomalies detected in the sensor data. The fault signature refers to an electronic footprint of the fault indications in the devices 182-188. The fault signatures contain information regarding various health status conditions of the devices 182-188.

The reliability module 124 performs steps of predicting the reliability of the LAE 180. The reliability of the LAE 180 is predicted based on the availability model. For example, probability of whether the devices 182-188 are capable of functioning for an additional interval of time '$\tau$' is calculated. For example, the reliability is computed by the formula $R(\tau|t) = P(T > t + \tau|T > t)$ where, $\tau$ is the additional time interval and '$t$' is the age of the devices 182-188.

Further, the reliability module 124 is configured to determine remaining life of the devices 182-188 and LAE 180. The remaining life refers to life of the devices 182-188 when faults are detected and when faults are not detected. The remaining life can be used to determine remaining useful life (RUL), down-time and maintenance time of the devices 182-188. The remaining life at the age $t$ is determined mathematically by

$$RL(t) = \int_0^\infty R(\tau|t)d\tau = \frac{1}{R(t)}\int_t^\infty R(\tau)d\tau.$$

The accuracy module 130 on execution is configured to predict accuracy for the process performed in the LAE 180 based on the sample model and the laboratory replica. The optimization module 132 is configured to determine a set of optimal parameters of the sample based on the functionality of the sample and/or process performed in the LAE 180. For example, if the process is blood sugar analysis, the optimal temperature for a blood sample in case of blood sugar analysis is in the range of 5°C-4°C when stored for approximately 24-72 hours. Therefore, the set of optimal parameters include metrics of temperature, shelf life of the sample, pressure, contamination threshold, etc.

The optimization module 132 is further configured to predict the accuracy, associated each of the set of optimal parameters. The accuracy is predicted based on the process by simulating each of the set of optimal parameters on the laboratory replica and the sample model. As used herein, the set of optimal parameters define a set of optimal measurements of critical variables associated with the process performed in the LAE. The predicted accuracy is used to determine an optimal accuracy required for the process. Based on the optimal accuracy optimal sample parameters are predicted. The optimal sample parameters an optimum measure of critical variables associated with the process.

The sensitivity module 134 is configured to generate a sensitivity model with relationship between the laboratory replica and the sample model. The sensitivity module 134 includes a perturbation analysis algorithm that determines a response from the sample model if there are changes in the LAE 180. Accordingly, the sensitivity model generates multiple responses from the sample model for various ambient conditions in the LAE 180, predicted faults in the devices 182-188, predicted remaining life of the device 182-188, etc. For example, the sensitivity model is a qualitative prior model, which is a network of known interactions between the parameters of the sample and the LAE 180.

The sample degradation module 136 is configured to predict the sample degradation in the sample based on the sensitivity model. As used herein "sample degradation" is a metric to represent the shelf life of the sample. For example, sample degradation is the number of hours the sample will retain its functionality in the LAE 180. Further, the sample degradation module 136 predicts based on the sensitivity model whether changes in the LAE 180 will reduce or increase the sample degradation.

The sample degradation module 136 is further configured to determine real-time parameters of the sample based on the sensor data associated with the LAE 180. The real-time parameters are compared with the set of optimal parameters to determine a deviation in the real-time parameters. Further, the sample degradation module 136 determines that the sample is usable for the process in the LAE 180 when the deviation is within a predetermined threshold. The predetermined threshold is provided by the user of the LAE 180 or generated by the sample degradation module 136 based on the functionality of the sample. When the sample is determined as usable, the sample degradation is predicted.

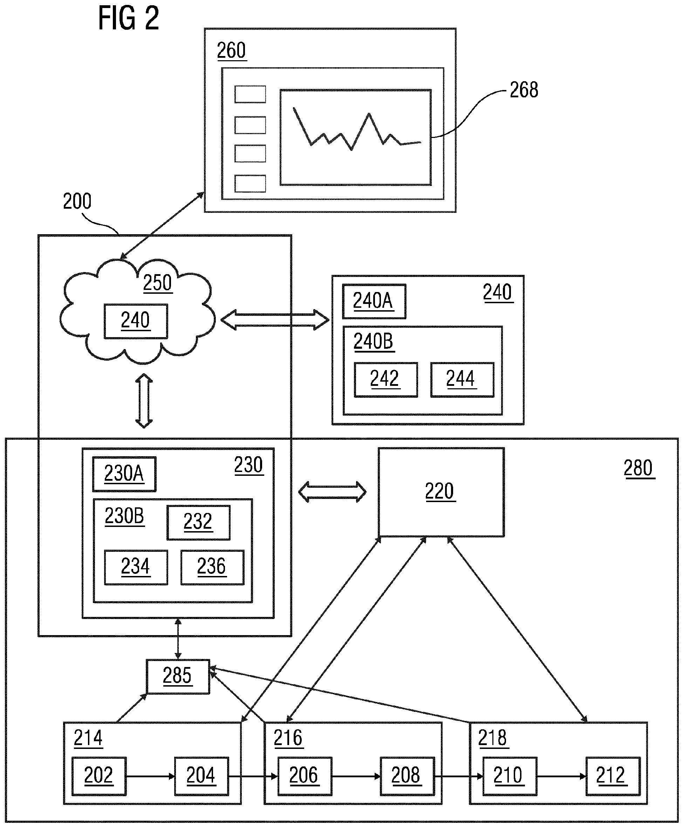

FIG 2 illustrates a block diagram of a system 200 to control a Lab Diagnostic System 280, according to an embodiment of the present invention. The Lab Diagnostic System 280 includes a pre-analytical unit 214, a post-analytical unit 216 and a sorting unit 218. The pre-analytical unit 214, the post-analytical unit 216 and the sorting unit 218 include multiple sub-units. For example, the pre-analytical unit 214 includes an input/output unit 202 and a tube inspection unit 204. The post-analytical unit 216 includes a tube sealer unit 206 and a tube de-sealer unit 208. The sorting unit 218 includes adaptable track unit 210 and connection buffer 212. The Lab Diagnostic System 280 also includes a sensing unit 285, a controller 220 and an Internet of Things (IoT) device 230. The IoT device 230 is communicatively coupled with the controller 220. As used herein, "IoT device" refers to device connected to the sensors unit 285 in the Lab Diagnostic System 280 on one end and to a cloud computing server 240 on the other end. The IoT device 230 includes a processing unit 230A and a memory 230B.

The system 200 includes the cloud computing server 240 communicatively coupled to the Lab Diagnostic System 280 via a network interface 250. The cloud computing server 240 is also communicatively coupled to a user device 260 that acts as a display device provided with a Graphical User Interface (GUI) 268. The server 240 includes a processing unit 240A and a memory 240B.

In operation, the server 240 and the IoT device 230 individually and/or in combination are capable of executing a simulation module and an accuracy module similar to the module 120 and 130 disclosed in the apparatus 100. FIG 2 illustrates an example of the modules executed in the IoT device 230 and the server 240. The memory 230A in the IoT device 230 includes a sample simulation module 232, a laboratory module 234 and an accuracy module 236. The memory 230B in the server 240 includes a sample training module 242 and a laboratory training module 244.

The sample training module 242 includes a sample database with samples that are analysable in the Lab Diagnostic System 280. Further, the sample database also includes parameters of the samples that define quality and functionality of the associated sample. A sample model is generated by the sample simulation module 232 at the IoT device 230 by predicting changes in the parameters based on sensor data from the sensing unit 285.

In an embodiment, multiple sample models are generated when multiple samples are analysed in the Lab Diagnostic System 280. For example, the input/output unit 202 is configured to integrate serum, plasma, whole blood, and urine sample loading. The sample training module 242 is configured to generate a set of relationships between the parameters of each of the samples (serum, plasma, whole blood, and urine) and type of diagnosis to be performed for each sample. Further, the sample simulation module 232 generates sample models for each of the samples. The sample models are updated with sensor data indicating tubes in which each sample is provided. The sample model is compared with the set of relationships to determine deviation. In an event, at the tube inspection unit 204 a mismatch between the samples and the tubes are detected. The mismatch is displayed as an alert to a user on the GUI 268.

The laboratory training module 244 on the server 240 is configured to generate a laboratory replica of the Lab Diagnostic System 280. The laboratory replica is further updated with the sensor data by the laboratory simulation module 234 on the IoT device 230. For example, the track unit 210 is responsible for transferring tubes from one location to another. If a fault indication is detected in a bearing of the track unit 210, the laboratory replica is updated with a fault model for the fault indication. Further, the laboratory replica is updated with an availability model of the track unit 210 based on the fault model. The accuracy module 236 on the IoT device 230 determines a sample degradation of the samples in the tubes. In addition, the accuracy module 236 predicts accuracy of the diagnosis performed for each of the samples based on the sample degradation. The accuracy is provided to the user of as an alert on the GUI 268.

Based on the sample degradation and the predicted accuracy the IoT device 230 generates a control signal to the controller 220 to modify operation parameters of one or more devices in the pre-analytical unit 214, the post-analytical unit 216 and the sorting unit 218.

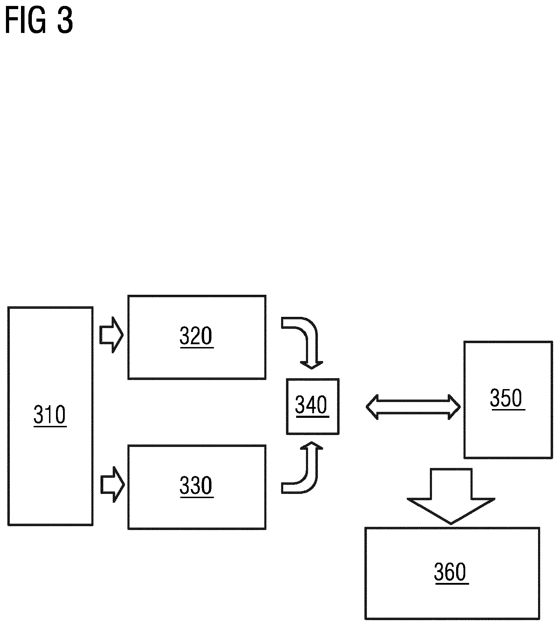

FIG 3 is a schematic representation illustrating operation of the system 200. The operation of the system 200 is performed in steps from 310 to 360. At step 310, the sensor data is received to determine the parameters associated with the sample. Also, an operation state of the Lab Diagnostic System 280 is determined at step 310. The operation state of the Lab Diagnostic system 280 is a representation of the sensor data associated with operation of devices in the pre-analytical unit 214, the post-analytical unit 216 and the sorting unit 218.

At step 320, the laboratory replica and the sample model are generated on the cloud computing server 240. At step 330, the laboratory replica and the sample model are validated based on the sensor data. At step 340, the accuracy of the diagnosis performed in the Lab Diagnostic system 280 is predicted. At step 350, a set of optimal parameters of the sample is determined based on the functionality of the sample and/or type of diagnosis performed. Further, an optimal accuracy is predicted by simulating the set of optimal parameters on the laboratory replica and the sample model.

At step 360, the IoT device 230 generates a control signal to the controller 220 to modify operation parameters of one or more devices in the pre-analytical unit 214, the post-analytical unit 216 and the sorting unit 218. Further, the predicted accuracy, the laboratory replica, the sample model is displayed on the user device 260 via the GUI 268.

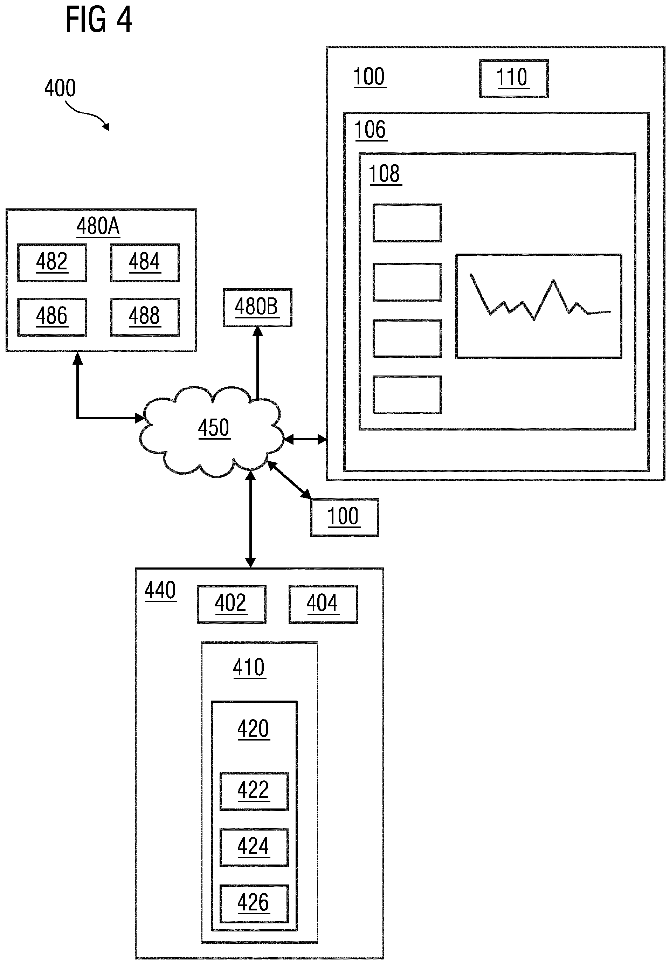

FIG 4 illustrates a block diagram of a system 400 to control multiple laboratory automation environments (LAEs) 480A-B, according to an embodiment of the present invention. The LAE 480A includes multiple devices 482-488. The system 400 includes multiple apparatus 100, each communicatively coupled to the LAE 480A-B via a network interface 450. The operation of the apparatus 100 is described hereinabove in FIG 1.

The system 400 includes a server 440 with a communication unit 402, a processing unit 404, and a memory 410. The memory 410 includes a learning module 420. The learning module 420 includes a laboratory learning module 422, a sample learning module 424 and a collaborative learning module 426. The laboratory learning module 422 includes laboratory training data for each of the LAEs 480A and 480B. For example, the laboratory training data includes historical operation parameters the LAEs 480A-B. The laboratory training data is provided to a neural network to analyse the historical operation parameters to generate an availability model for each of the LAEs 480A-B.

The sample learning module 424 includes sample training data such as historical parameters of the sample. For example, the historical parameters include sample parameters associated with high quality and functionality. The sample learning module 424 is configured to predict the accuracy of the processes performable in the LAEs 480A-B based on the sample training data.

The collaborative learning module 426 is configured to apply learning from the laboratory training data of the LAE 480A to the LAE 480B based on a variability factor. The variability factor is a measure of variation in devices in the LAEs 480A and 480B including variation in operation environment associated with each of the LAE 480A and 480B, operation profile of each of the LAE 480A and 480B, etc.

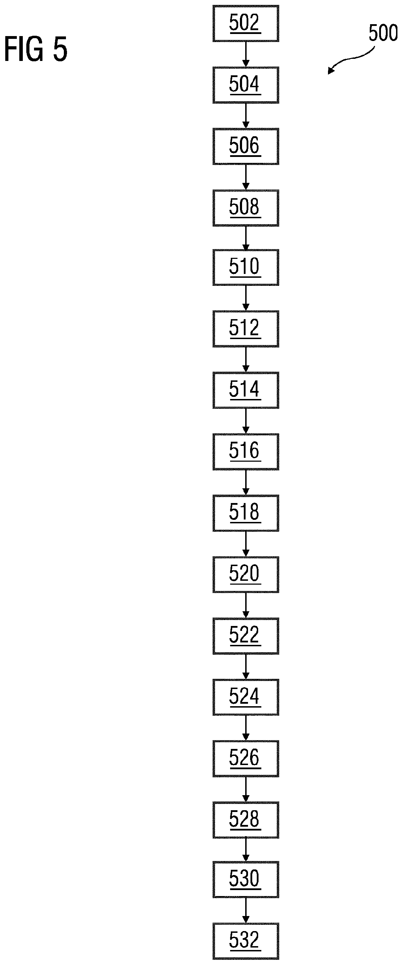

FIG 5 is a flowchart of a method 500 of operating a Laboratory Automation Environment (LAE), according to an embodiment of the present invention. The LAE refers to a laboratory set-up in which one or more processes are performed. The processes include analysis and/or testing of samples. As used herein, multiple samples refer to multiple types of samples such as blood, serum, pharmaceutical compound, etc. For the purpose of the method 500, the LAE is considered to perform a single process with a sample. The method starts at step 502 of receiving sensor data from sensing units provided in the LAE. The sensor data the sensor data is a measure of the operation parameters that reflects the condition of devices and the sample in the LAE.

At step 504 a sample model associated with the sample process-able in the LAE is generated. The sample model comprises parameters associated with quality and functionality of the sample. The parameters include physical, chemical, biological, and/or microbiological parameters within a distribution spectrum to ensure that the functionality of the sample is achieved. For example, temperature of the LAE for blood sample to be suitable for a platelet analysis. At step 506 a set of optimal parameters of the sample is determined based on the functionality of the sample and/or process performed in the LAE.

At step 508 accuracy associated each of the set of optimal parameters is predicted. The accuracy is predicted for the process performed in the LAE by simulating each of the set of optimal parameters on the sample model and the laboratory replica. By simulating the set of optimal parameters on the sample model, behaviour of the sample is predicted when the parameters are changes. Further, by simulating the set of optimal parameters on the laboratory replica, reliability of the LAE, availability and remaining life of the devices in the LAE may be predicted. At step 510 an optimal accuracy required for the process is determined based on the predicted accuracy. Further, at step 512 optimal sample parameters of the sample predicted based on the optimal accuracy. The optimal sample parameters are an optimum measure of critical variables associated with the process. In an embodiment, the optimal sample parameters include operation parameters of the devices in the LAE to ensure the optimal accuracy of the process.

At step 514, real-time parameters of the sample are determined based on the sensor data. At step 516, the real-time parameters and the set of optimal parameters are compared to determine a deviation in the real-time parameters. At step 518, the sample is analysed to determine whether it is usable for the process. The sample is determined as usable when the deviation is within a predetermined threshold. At step 520, sample degradation is predicted when the sample is determined as usable.

At step 522 the laboratory replica of the LAE is generated. The laboratory replica represents operation state of the LAE in real-time by modelling the sensor data from the sensing unit. Further, the laboratory replica includes an availability model of the LAE, simulation of each of the devices and a fault model of the LAE. At step 524 the availability model and the fault model of the LAE is generated. The availability model is based on predicted availability of the devices and includes remaining life of the devices. The fault model is a model of fault indications in the LAE. The fault indications are determined from the sensor data and are simulated on probabilistic models to generate the fault model. The fault model also includes prediction of the impact of the fault indications on the sample.

At step 526, the laboratory replica is updated with updation in the operation state. Accordingly, changes in the sensor data are modelled to predict reliability and availability of the LAE. The updation of the laboratory replica may be performed in real-time, for example, when the laboratory replica is generated in the premises of the LAE. The updation of the laboratory replica may also be performed at predetermined intervals. For example, when the laboratory replica is generated and maintained on a cloud computing platform.

At step 528, reliability of the LAE is predicted based on the laboratory replica. The reliability of the LAE is predicted based on the availability model. For example, the predicted reliability is probability of whether the devices are capable of functioning for an additional interval of time $'\tau'$.

At step 530, the predicted reliability, the availability model, the fault model, the laboratory replica and/or the sample model are rendered on a display unit. For example, representative views of the devices and/or a portion of the LAE is rendered on a display device (such as desktop monitor, mobile screen, etc.). At step 532, a control signal is generated to control the LAE based on the predicted reliability and the sample model. The control signal may include instructions to change the operation state of the LAE to reflect the optimal sample parameters.

The present invention can take a form of a computer program product comprising program modules accessible from computer-usable or computer-readable medium storing program code for use by or in connection with one or more computers, processing units, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

Reference signs

    FIG 1

        apparatus 100
        communication unit 102
        processing unit 104
        display 106
        Graphical User Interface 108
        memory 110
        sample module 112
        sample training module 114
        sample simulation module 116
        laboratory module 118
        simulation module 120
        laboratory simulation module 122
        reliability module 124
        accuracy module 130
        optimization module 132
        sensitivity module 134
        sample degradation module 136
        control module 140.
        network interface 150
        Laboratory Automation Environment 180
        devices 182-188
        sensing unit 185
        controller 190
        transceiver 192
        processing unit 194
        memory 196

    FIG 2

        system 200
        input/output unit 202
        tube inspection unit 204
        tube sealer unit 206
        tube de-sealer unit 208
        adaptable track unit 210
        connection buffer 212
        pre-analytical unit 214
        post-analytical unit 216
        sorting unit 218
        controller 220
        Internet of Things device 230
        processing unit 230A
        memory 230B

sample simulation module 232
laboratory module 234
accuracy module 236
cloud computing server 240
processing unit 240A
memory 240B
sample training module 242
laboratory training module 244
Lab Diagnostic System 280
sensing unit 285
user device 260
Graphical User Interface 268

FIG 3 Flowchart
FIG 4

system 400
communication unit 402
processing unit 404
memory 410
learning module 420
laboratory learning module 422
sample learning module 424
collaborative learning module 426
server 440
network interface 450
laboratory automation environments 480A-B
multiple devices 482-488

FIG 5 Flowchart

## Claims

1. A method of operating a laboratory automation environment (280), the laboratory automation environment (280) comprising a plurality of devices (202-212), the method comprising:

    generating a sample model associated with a sample process-able in the laboratory automation environment (280), wherein the sample model comprises parameters associated with quality and functionality of the sample;
    predicting reliability of the laboratory automation environment (280) based on a laboratory replica of the laboratory automation environment (280); and
    operating the laboratory automation environment (280) based on the predicted reliability and the sample model.

2. The method according to claim 1, further comprising:

    predicting an accuracy of a process performed in the laboratory automation environment (280) based on the sample model and the laboratory replica.

3. The method according to claim 2, wherein predicting the accuracy of the process performed in the laboratory automation environment (280) comprises:

    determining a set of optimal parameters of the sample based on one of the functionality of the sample and process performed in the laboratory automation environment (280), wherein the set of optimal parameters define a set of optimal measures of critical variables associated with the process;
    predicting the accuracy of the process for each of the set of optimal parameters by simulating each of the set of optimal parameters on one of the sample model and the laboratory replica; and
    determining an optimal accuracy required for the process based on the predicted accuracy.

4. The method according to claim 3, further comprising:

    predicting optimal sample parameters of the sample in the laboratory automation environment (280) based on the optimal accuracy, wherein the optimal sample parameters is an optimum measure of the critical variables associated with the process.

5. The method according to one of claim 1 to claim 4, further comprising:

    determining real-time parameters of the sample based on sensor data associated with the laboratory automation environment (280);
    comparing the real-time parameters and the set of optimal parameters to determine a deviation in the real-time parameters;
    determining that the sample is usable for the process in the laboratory automation environment (280) when the deviation is within a predetermined threshold; and
    predicting a sample degradation when the sample is determined as usable.

6. The method according to any of the preceding claims, further comprising:

    generating the laboratory replica of the laboratory automation environment (280) representing an operation state of the laboratory automation environment (280) in real-time, wherein the laboratory replica comprises an availability model of the laboratory automation environment (280), simulation of each of the plurality of devices (202-212) and a fault model of the laboratory automation environment (280); and
    updating the laboratory replica of the laboratory automation environment (280) with updation in the operation state of the laboratory automation environment (280).

7. The method according to claim 6, further comprising:

    generating the availability model of the laboratory automation environment (280) the based on availability of the plurality of devices (202-212), wherein the availability model comprises remaining life of the plurality of devices (202-212) .

8. The method according to any of the preceding claims, wherein generating the sample model comprises:

    determining the parameters associated with the quality and the functionality of the sample by:

        determining critical variables associated with physical, chemical, biological, and/or microbiological characteristics of the sample; and

        predicting impact of variation in the parameters on the quality and the functionality of the sample.

9. The method according to any of the preceding claims, further comprising:

    generating a sensitivity model with relationship between the laboratory replica and the sample model; and
    predicting the sample degradation in the sample based on the sensitivity model.

10. The method according to any of the preceding claims, further comprising rendering one of the sample model, the laboratory replica, the availability model, the fault model, the sensitivity model, and the sample degradation on a display device (260).

11. An apparatus (100) of operating a laboratory automation environment (180), the laboratory automation environment (180) comprising a plurality of devices (182-188), the apparatus comprising:

    one or more processing units (104); and
    a memory (110) communicatively coupled to the one or more processing units (104), wherein the memory (110) comprises a control module (140) stored in the form of machine-readable instructions executable by the one or more processing units, wherein the control module (140) is configured to perform one or more method steps according to claims 1 to 10.

12. The apparatus (230) according to claim 11, wherein the laboratory automation environment (280) is a medical diagnostic environment and the plurality of devices (202-212) comprises of a pre-analytics unit (214), a post-analytics unit (216) and a sorting unit (218).

13. A system (400) comprising:

    one or more devices capable of providing sensor data associated with operation of a plurality of laboratory automation environments (480A-480B); and
    one or more apparatuses (100) according to claims 11-12, communicatively coupled to one or more devices, wherein each of the apparatuses (100) is configured to control operation of at least one of the plurality laboratory automation environments (480A-480B).

14. A computer-program product having machine-readable instructions stored therein, which when executed by a processing unit (104), cause the processing unit (104) to perform a method according to claims 1 to 10.

# FIG 1

FIG 2

# FIG 3

# FIG 4

400

100    110

106

108

480A
482    484
486    488

480B

450

100

440    402    404

410

420

422

424

426

FIG 5

502 → 504 → 506 → 508 → 510 → 512 → 514 → 516 → 518 → 520 → 522 → 524 → 526 → 528 → 530 → 532

500

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/117042 A1 (TAJIMA YOSHIYUKI [JP] ET AL) 9 May 2013 (2013-05-09) * paragraphs [0004], [0018] - [0019] * | 1-14 | INV. G06F11/00 |
| X | WO 2018/111721 A1 (BECKMAN COULTER INC [US]) 21 June 2018 (2018-06-21) * paragraphs [0002], [0040] - [0043]; figures 8-9 * | 1-14 | ADD. G01N35/00 |
| A | US 2012/042214 A1 (JACOBS MERRIT N [US] ET AL) 16 February 2012 (2012-02-16) * paragraphs [0002], [0009] - [0015], [0052], [0060] * | 1-14 | |
| A | EP 3 035 251 A2 (SIEMENS AG [DE]) 22 June 2016 (2016-06-22) * paragraph [0035]; figure 1 * | 1-14 | |
| A | US 2009/113049 A1 (NASLE ADIB [US] ET AL) 30 April 2009 (2009-04-30) * paragraphs [0049] - [0077] * | 1-14 | |
| | | | TECHNICAL FIELDS SEARCHED (IPC) |
| | | | G01N G06F G06K |

The present search report has been drawn up for all claims

| Place of search | Date of completion of the search | Examiner |
|---|---|---|
| The Hague | 5 March 2019 | van Lith, Joris |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

..........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 19 7970

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2019

| Patent document cited in search report | | Publication date | Patent family member(s) | | Publication date |
|---|---|---|---|---|---|
| US 2013117042 | A1 | 09-05-2013 | CN | 102893161 A | 23-01-2013 |
| | | | EP | 2570814 A1 | 20-03-2013 |
| | | | JP | 5432816 B2 | 05-03-2014 |
| | | | JP | 2011242154 A | 01-12-2011 |
| | | | US | 2013117042 A1 | 09-05-2013 |
| | | | WO | 2011142182 A1 | 17-11-2011 |
| WO 2018111721 | A1 | 21-06-2018 | NONE | | |
| US 2012042214 | A1 | 16-02-2012 | CA | 2753571 A1 | 02-09-2010 |
| | | | CN | 102428445 A | 25-04-2012 |
| | | | EP | 2401678 A1 | 04-01-2012 |
| | | | JP | 5795268 B2 | 14-10-2015 |
| | | | JP | 2012519280 A | 23-08-2012 |
| | | | US | 2012042214 A1 | 16-02-2012 |
| | | | WO | 2010099170 A1 | 02-09-2010 |
| EP 3035251 | A2 | 22-06-2016 | NONE | | |
| US 2009113049 | A1 | 30-04-2009 | AU | 2008356120 A1 | 12-11-2009 |
| | | | CA | 2701997 A1 | 12-11-2009 |
| | | | CA | 2883059 A1 | 12-11-2009 |
| | | | EP | 2223260 A2 | 01-09-2010 |
| | | | US | 2009113049 A1 | 30-04-2009 |
| | | | US | 2015112907 A1 | 23-04-2015 |
| | | | US | 2016048757 A1 | 18-02-2016 |
| | | | WO | 2009136230 A2 | 12-11-2009 |

EPO FORM P0459

For more details about this annex : see Official Journal of the European Patent Office, No. 12/82